# EUROPEAN PATENT APPLICATION

(11) **EP 1 413 968 A1**
(43) Date of publication of application: **28.04.2004**
(21) Application number: 03024211.9
(22) Date of filing: 21.10.2003
(51) Int. Cl.: G06F 17/60

(54) **A system and method for providing an insurance product**

(30) Priority: 22.10.2002 AU 2002952193
(71) Applicant: SURECAN TECHNOLOGY PTY LTD, Sydney, NSW 2000 (AU)
(72) Inventor: Monk, Simon, St. Leonards NSW 2065 (AU)
(74) Representative: Manitz, Finsterwald & Partner GbR

(57) **Abstract**

The present invention provides a system and method for providing an insurance product. The insurance product is provided via a computing network, and the method comprises the steps of issuing an insurance product to a subscriber, and allowing the subscriber to access the computing system through a network, so as to vary at least one term of the issued insurance product.

## Description

### FIELD OF THE INVENTION

The present invention relates to a system and method of providing an insurance product, and specifically, but not exclusively, to a system and method for providing travel insurance via a distributed computing network, such as the Internet.

### BACKGROUND OF THE INVENTION

Travel insurance is a well-known insurance product, which has been available for many years. Generally a subscriber purchases travel insurance directly through a travel agent when he or she plans their holiday.

Once the trip is planned and/or paid for, there is no opportunity for a subscriber to vary or extend their travel insurance, especially when the subscriber has already left the country. The inability to vary or extend the insurance policy may be due to a number of factors. For example, it may be difficult to contact the travel agent due to time differences, a lack of contact details, etc.

Moreover, a subscriber may have difficulty establishing their identity over the telephone, and payment methods may be cumbersome and/or insecure.

With the growth of "backpacker" holidays, which are generally open-ended and subject to change during the holiday, the problem of extending travel insurance is more acute. A backpacker may not make extensive plans before travelling, and may change their proposed travel route several times during a holiday. Furthermore, a backpacker may decide to extend their holiday. In these circumstances, a standard travel insurance policy may not adequately cover a backpacker's requirements. The backpacker may not want to be constrained to a particular type of insurance cover, valid within a particular area, for a particular time.

### SUMMARY OF THE INVENTION

In a first aspect, the present invention provides a system for providing an insurance product, comprising, a client system capable of displaying information regarding a range of insurance products, the client system, including appropriate means to send a subscriber request to a server system, an issuing component of the server system capable of receiving the subscriber request and issuing an insurance product to the subscriber,
characterised in that, in response to a further subscriber request sent from the client system, the issuing component of the server system allows the subscriber to vary at least one term of the issued insurance product.

In one embodiment, the client system includes an interface that prompts information from the subscriber, the information being sent to the server system, and the information being applied by the server system to calculate the cost of the insurance product.

Advantageously, the system further comprises a database that includes at least one table of data, wherein the information obtained from the subscriber is utilised to locate a value in the at least one table of data, the value being the purchase cost of the insurance product.

The database may include a first and a second table, the first table being utilised to calculate the cost to the subscriber when the subscriber is issued with the insurance product, and the second table being utilised to calculate the cost to the subscriber when the subscriber varies the at least one term in the insurance product.

In an embodiment, the system comprises authenticating means to authenticate the subscriber before obtaining information from the subscriber.

The client system may also include a claims interface to prompt a subscriber to provide claim information, the claim information being compared with a predetermined rule set contained within the database, to determine whether the subscriber is entitle to receive compensation for the claim.

The at least one term of the insurance product may be the time period for which the insurance product is valid, the intended destination of the subscriber, and/or the total coverage value of the insurance policy.

In a particular embodiment, the insurance product is travel insurance.

In a second aspect, the present invention provides a method of providing an insurance product via a computing network, comprising the steps of, issuing an insurance product to a subscriber, and allowing the subscriber to access the computing system through a network, so as to vary at least one term of the issued insurance product.

### DETAILED DESCRIPTION OF THE DRAWINGS

An embodiment of the present invention will be presented by way of example, with reference to the accompanying drawings, in which:
Figure 1 is a diagrammatic representation of a system in accordance with an embodiment of the invention;
Figure 2 is an example of a home page and customer login procedure in accordance with an embodiment of the present invention;
Figure 3 is an example of web pages describing the purchase procedure in accordance with an embodiment of the present invention; and
Figure 4 is an example of web pages describing the claim management system in accordance with an embodiment of the present invention.

### SPECIFIC EMBODIMENT OF THE INVENTION

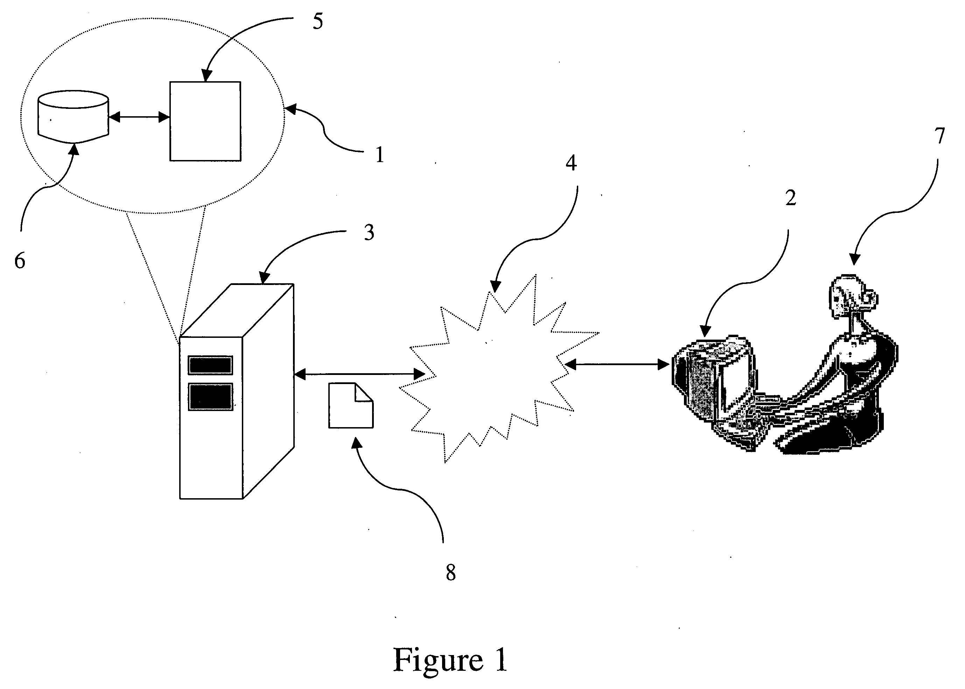

In the drawings, there is shown a travel insurance product which is provided via a computing network. As shown in figure 1, an embodiment of the present invention comprises a server 1 (that is, a particular type of computing system) capable of providing information to and receiving information from least one remote terminal 2. The server may be arranged to reside on any suitable computing system 3, such as a computing system connected to the Internet 4, although it will be understood that the computing system may be connected to any suitable network of computers, including a proprietary Intranet.

The server may further comprise a web server 5 in communication with a database 6. A subscriber 7 can gain access to the database through the web server by providing an appropriate login sequence 8, the login sequence being unique to the subscriber, such that the server is capable of distinguishing between different subscribers.

In an embodiment, communication between the remote terminal and the server is secure, to minimise the risk of the release of sensitive information. It will be understood that any appropriate encryption method may be used, and the use of different encryption techniques to secure the information relayed to the server and/or stored on the server is within the purview of a person skilled in the art.

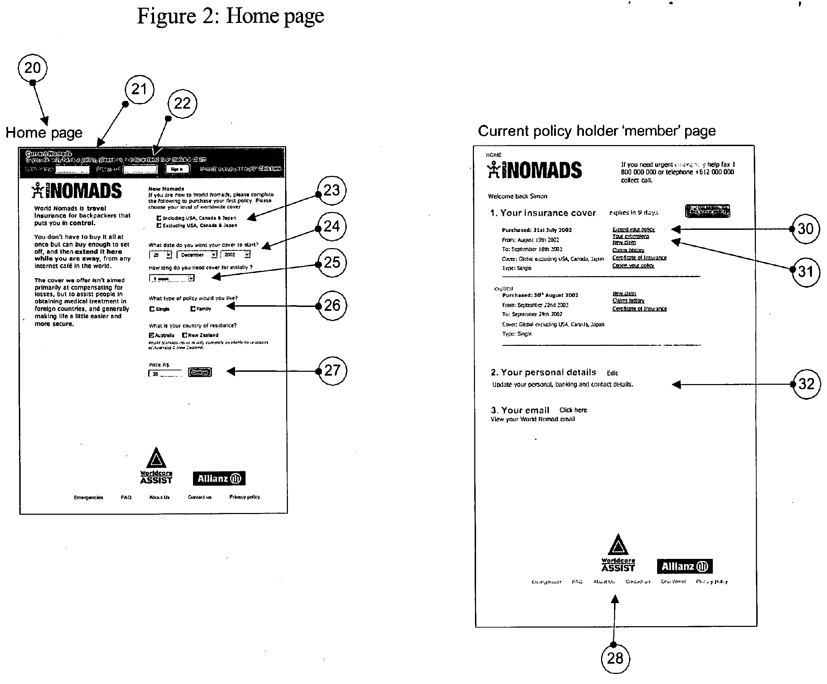

A specific embodiment of the invention will now be described, by way of example only, with reference to figures 2, 3 and 4.

At figure 2 there is shown a sample web page in accordance with an embodiment of the invention. There is shown a "home" page 20, which is the page presented to the subscriber when the web site is initially accessed. If the subscriber has previously used the service, they can log into the server by using boxes 21 and 22, where they can enter a unique username and password respectively. This option is generally chosen when the subscriber has previously purchased an insurance policy.

If the subscriber is accessing the web site for the first time, they will be required to enter some preliminary information with regard to the type of insurance policy (23 and 26) and the term (i.e. time period) for which they seek insurance (24 and 25). Once the subscriber has entered the necessary information, a preliminary cost for the insurance policy is calculated displayed at box 27. The cost of the insurance policy may be determined by either substituting appropriate values into a mathematical formula, in accordance with a set of predefined rules, or may depend on the provision of "built-in" lookup tables. Any suitable method used in the insurance industry to ascertain the value and/or cost of an insurance policy may be employed in the computing system.

In one embodiment, there is provided two sets of tables: a first table for initial purchase and a second table for extensions. Each table provides a different cost depending on whether the purchase is an initial purchase or a renewal purchase. If a subscriber is purchasing an insurance policy for the first time, the first table would be employed. The second table is employed when the customer has already purchased an insurance policy, and wishes to extend their policy.

In one embodiment, the aforementioned "lookup table" is used to calculate the value of the policy. The data provided by the subscriber is correlated to a set of predefined values that reside in the database.

The database lookup tables enable country specific settings for prices, benefits and business rules such that both the currency and the value of the price and the benefits can vary from country to country.

For example, if a subscriber is 30 years old, is travelling to include the United States of America, and wishes to take out cover that includes Medical Expenses to the value of $500,000, then these four parameters (namely age, destination, type of insurance and value of policy) are used to find the appropriate pre-calculated policy cost that is pre-programmed into an n-dimensional array (lookup table) of values.

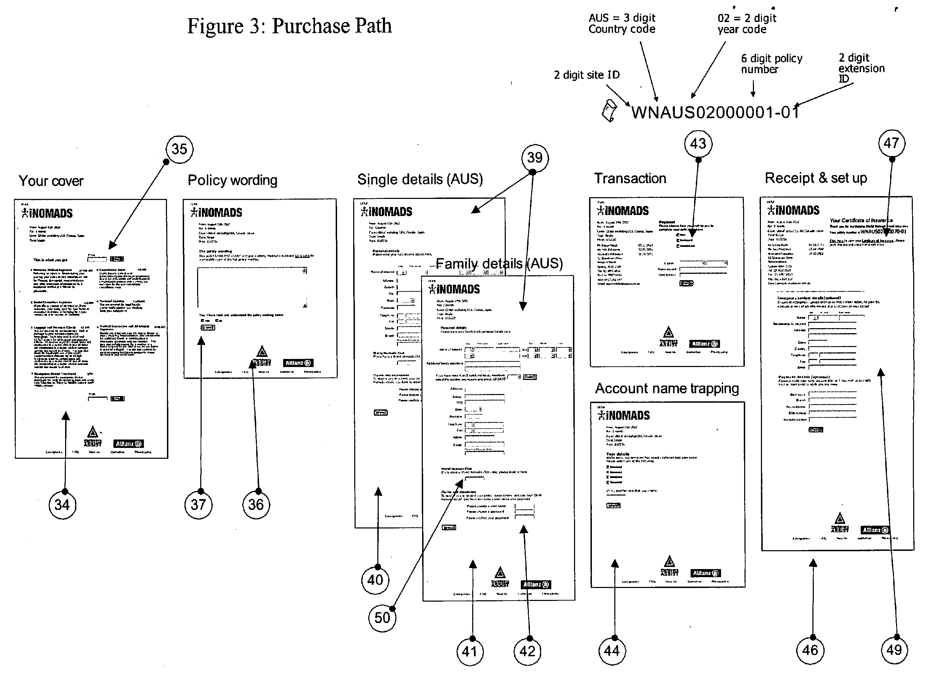

Once the system has calculated the appropriate policy cost, the subscriber will then be taken to a series of "purchase path" screens, as shown in figure 3. In figure 3, there is shown a web page (34), which contains information with regard to the type of insurance policy chosen by the subscriber in previous screens (20) (in figure 2). The web page incorporates a "buy" button (35), which the subscriber will select if they wish to proceed with the transaction. If the subscriber clicks on the "buy" button (35), they are taken to a further web page (36), which outlines the legal terms and conditions of the insurance policy. The subscriber is required to consent to these conditions by clicking the "I Agree" button (37).

Once the subscriber has verified that the insurance they have selected is correct, and they have further agreed to be bound by the terms and conditions of the insurance policy, they will be taken to an information input screen (39). Different screens may be provided for different types of subscribers. In the embodiment described herein, two types of screens are provided. The first screen (40), is arranged for a single subscriber (i.e. where the subscriber is applying for an insurance policy to cover only a single person). The second screen (41), is arranged for families (i.e. where a subscriber is applying for an insurance policy to cover a group of people).

The subscriber is required, at screens (40) or (41), to enter personal information by using the drop down menus and input boxes provided. The personal information, in one embodiment, includes the full name of the subscriber, (plus the names of other family members or associates if the subscriber intends to obtain "group" cover), the subscriber address, and their contact details such as telephone numbers, facsimile numbers and/or email addresses. The subscriber is also required to choose a username and password (42), which will be used to identify the subscriber in subsequent transactions.

It will be understood that the amount or type of information requested from the subscriber may vary according to the insurance product purchased by the subscriber, local statutory and common law requirements, and any other considerations that may be required to establish an insurance policy within a particular jurisdiction or country.

The information gathered may include, but is not limited to, the full name and contact details of the subscriber, the age and gender of the subscriber, details with regard to any preexisting medical conditions, the type of insurance sought, the term of the policy, the pay-out value of the policy, etc.

It will be understood that the preceding types of information are given by way of example only, and should not be construed as limiting. A person skilled in the art would be capable of compiling a series of questions required to form a preliminary assessment of the subscriber, and to ascertain the cost of an insurance policy.

In one embodiment, there may also be a further input box (50), which allows a subscriber to receive a discount (or other preferential treatment) by entering a special keyword or other unique identifier.

Once the subscriber has entered the personal information at input boxes, they will be taken to a further web page (43), which will require them to choose a payment method by using input boxes and radio buttons. Generally, the purchase would entail the provision of credit card details through a secure interface. The web server will then interface with a bank (or other financial institution) computing system, and transfer the appropriate funds from the subscribers banking account to the insurance providers account. However, other electronic payment methods may also be used, such as direct bank transfers or other "online" monetary systems such as WorldPay™, PayPal™ or Technocash™.

If the subscriber has chosen a username that has been previously allocated to another subscriber, the subscriber may further be presented with a web page (44), which requests the subscriber to choose another username.

Once the subscriber has provided all relevant payment details and personal information, the insurance policy purchased by the subscriber will be allocated a unique identifier (47), and the subscriber will be taken to web page (46), where they will be shown the details of their insurance policy, including the unique identifier (47).

The subscriber may optionally enter a set of emergency contact details (49), should they wish their next of kin to be contacted in the case of an emergency.

Once the subscriber has verified that their details are correct, they are taken to a final web page, which is a "certificate of insurance". This page outlines all relevant details of the insurance policy, including those who are a party to the insurance policy, the unique identifier, the type of cover sought, and the term of the insurance policy. The web page is provided in a "print friendly" format, so that a subscriber may obtain a printed copy as a permanent record of the transaction.

If the subscriber has previously used the service, the subscriber has the option of extending the insurance policy an infinite number of times.

After entering their login name and password, they will be taken to web page 28. At web page 28, the subscriber is given a number of options.

In some circumstances the subscriber may change the start date of the policy, either bringing the start date forward or moving the start date back. Furthermore, the user can:
- extend the period of their insurance policy (30)
- make a claim on their insurance policy (31) using the online claims systems, or
- vary their personal details (32).

All of the above functions have specific business rules associated with each function. The database contains the rules, and the rules are cross-referenced with the subscriber's policy to ensure that the subscriber is able and has permission to execute the function requested. If the subscriber is not authorised to carry out a particular action, the system automatically disables the selected function.

For example, a subscriber may initially purchase an insurance policy including the United States of America for a period of 30 days. Whilst the subscriber is vacationing in the United States, he or she may decide to travel to Canada for 14 days. The subscriber may extend his or her travel insurance by logging onto the web site, choosing the option to pay for an extension of the policy for a further 14 days, and paying the appropriate fee. The subscriber will then be covered by the same policy, but the policy will be extended for the additional 14 days.

In an embodiment of the present invention, there is also provided a Claims Management System to manage and pay out insurance claims.

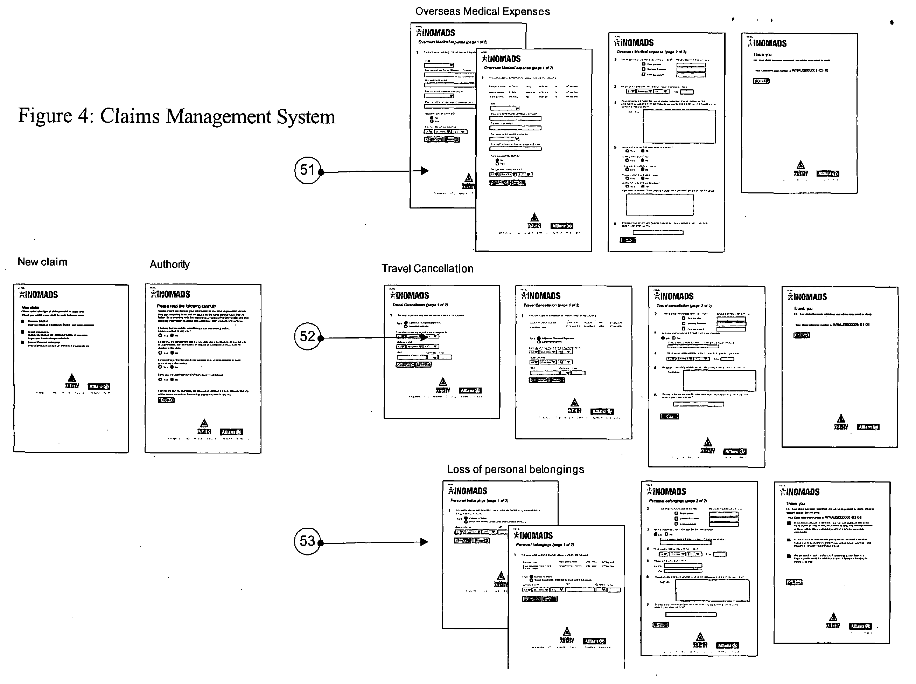

In figure 4, there is shown web pages (51), (52) and (53), which represent examples of the types of claims which may be sought by a subscriber. At (51) there is shown a claim web page for overseas medical expenses. At (52) there is shown a claim page for travel cancellation. At (53) there is shown a claim web page for loss of personal belongings. All these claim web pages embody similar elements. They include a number of input boxes and drop down menus which allow a subscriber to input information with regard to their claim. This may include the type of claim (i.e. medical costs, loss of luggage, etc.), the value of the claim, details with regard to how the situation which led to the claim arose, the time and place at which the situation arose and any other circumstances which are relevant to the claim. Once the subscriber has provided this information, the claim is submitted and the subscriber is allocated a claim number.

The claim is saved to a database where it can be accessed by an insurance underwriter for assessment. The data is also posted directly to the underwriters claims system as a secure XML https post.

The underwriter can automatically pass electronic messages back through the secure post to the subscriber if more information is needed. This enables the subscriber to fully action claims that arise, even if the subscriber is away from their home for extended periods.

The online claims system includes a database which incorporates a number of rules which determine the benefits that a particular subscriber is entitled to, and cross-references the dates of the policy and the extensions to that policy to determine if they claim being made is valid. In other words, the online claims system component automatically carries out a number of basic administrative checks, to determine whether the claim is prima facie valid and within the terms of the insurance policy.

In one embodiment of the present invention, the claim, once determined to be prima facie valid, is then passed onto the insurance underwriter who can then perform further checks (such as verifying receipts, police reports, etc.) and consequently either authorise the claim, or request further information from the subscriber. If further information is required, the underwriter can send messages to the subscriber through the messaging system provided in the online claims system. This allows the underwriter and the subscriber to communicate easily, irrespective of the location of the subscriber and/or the underwriter.

In another embodiment of the present invention, the online claims system may be configured to automatically pay out compensation for a claim if the claim is below a certain monetary value, and if the claim is prima facie valid. This is particularly advantageous, as it removes much of the administrative work and time that would be required if an underwriter were to manually investigate the claim. In many cases, where the value of the claim is small, it may be more cost efficient to automatically pay the claim instead of expending time and effort manually verifying the claim. By including a set of predetermined rules which determine whether the claim complies with specified basic criteria (and is therefore prima facie valid), many man hours of work may be saved.

Furthermore, the subscriber also advantageously receives their compensation in a much shorter time, which may be quite useful if they require the compensation to repurchase lost or stolen items, or to pay for medical expenses.

An example of how a system in accordance with an embodiment of the invention is created will now be described. An embodiment of the present invention is constructed using Microsoft™ .NET object oriented language. The system utilises an object model which defines a set of business rules that enable the insurer to place particular parameters around what a subscriber can and cannot do with their policy, whilst enabling the subscriber to interact with their policy.

An Object Model defines a relationship between insurance products, policies sold to subscribers for those products and the extensions and claims for each policy.

The object model is translated, on a practical level, into a series of interlined documents residing on the database of the server system, and appear to the end user as a number of "product" on a website. Each product, once issued to a subscriber generates an appropriate policy, each policy is capable of generating an extension, and each extension is capable of generating a claim.

The insurer creates the insurance products using a suitable interface. Products can be constructed for each country, or a single product may cover multiple regions.

When a subscriber purchases a product, a policy is created, and each policy sold has a duration of time for which the policy is valid. The insurer can specify one of several durations for each product.

Each policy can have multiple cover types, as needed by the insurer to define their product offerings.

Correspondingly, each product may have multiple traveller types, for example, single and family.

Each policy is then assigned a series of clauses, which define the limits of the cover offered by the policy. The clauses do not specify an amount, but only the specific benefits offered.

The system then allows the insurer to add a benefit amount for each clause and prices to each of the permutations created by combining the cover types and traveller types.

For each permutation created by combining the cover type and traveller type, the insurer is then able to add benefit amounts and prices. The benefit amounts add a value and currency to each insured clause. The prices specify the value and currency the subscriber must pay, on a duration-by-duration basis, for the initial policy and each additional extension thereafter.

Once the products have been assigned to the various countries in the system, they can then be made available to the subscriber.

Once the subscriber has made a purchase, the software provides the subscriber with details regarding their coverage, and it allows them to change their details as necessary.

The subscriber is able to service themselves through a claims system driven by their policy. Each claim or extension requested by the subscriber generates an extension or claim which becomes associated with the original policy.

As such, all extensions and claims are retained under the original policy.

At least an embodiment of the present invention provides a number of advantages. Firstly, the present invention allows a subscriber to interact with a known and trusted insurance company. Secondly, the subscriber is free to change or alter their holiday plans, in the knowledge that they can vary their travel insurance policy without any difficulty. Thirdly, the use of a secure web interface and a secure login procedure overcomes the inherent security issues created when dealing with an unknown agent in a foreign country, or with attempting to repurchase an insurance policy over the telephone. Fourthly, the online claims management system, which is incorporated into at least one embodiment of the invention, allows the subscriber to submit and manage claims easily, irrespective of their location.

Whilst the present invention has been described with reference to the Internet and to the use of an HTML and XML interface, it will be understood that other appropriate technologies may be utilised to enable the invention, and the invention is not limited to the embodiment hereinbefore described.

Modifications and variations as would be apparent to a skilled addressee are deemed to be within the scope of the present invention.

## Claims

1. A system for providing an insurance product, comprising, a client system capable of displaying information regarding a range of insurance products,
the client system, including appropriate means to send a subscriber request to a server system, an issuing component of the server system capable of receiving the subscriber request and issuing an insurance product to the subscriber, **characterised in that**, in response to a further subscriber request sent from the client system, the issuing component of the server system allows the subscriber to vary at least one term of the issued insurance product.

2. A system in accordance with claim 1, wherein the client system includes an interface that prompts information from the subscriber, the information being sent to the server system, and the information being applied by the server system to calculate the cost of the insurance product.

3. A system in accordance with claim 2, further comprising a database that includes at least one table of data, wherein the information obtained from the subscriber is utilised to locate a value in the at least one table of data, the value being the purchase cost of the insurance product.

4. A system in accordance with claim 3, wherein the database includes a first and a second table, the first table being utilised to calculate the cost to the subscriber when the subscriber is issued with the insurance product, and the second table being utilised to calculate the cost to the subscriber when the subscriber varies the at least one term in the insurance product.

5. A system in accordance with claim 4, comprising authenticating means to authenticate the subscriber before obtaining information from the subscriber.

6. A system in accordance with claim 5, wherein the client system further includes a claims interface to prompt a subscriber to provide claim information, the claim information being compared with a predetermined rule set contained within the database, to determine whether the subscriber is entitled to receive compensation for the claim.

7. A system in accordance with claim 6, wherein the server system includes an interface which communicates the claim information to an insurance underwriter for further processing.

8. A system in accordance with claim 7 wherein
the at least one term of the insurance product is the time period for which the insurance product is valid.

9. A system in accordance with claim 8, wherein the at least one term of the insurance product is the intended destination of the subscriber.

10. A system in accordance with claim 9, wherein the at least one term of the insurance product is the total coverage value of the insurance policy.

11. A system in accordance with claim 10, wherein the insurance product is travel insurance.

12. A method of providing an insurance product via a computing network, comprising the steps of, issuing an insurance product to a subscriber, and allowing the subscriber to access the computing system through a network, so as to vary at least one term of the issued insurance product.
